# EUROPEAN PATENT APPLICATION

(11) **EP 3 031 331 A1**
(43) Date of publication of application: **15.06.2016**
(21) Application number: 15197179.3
(22) Date of filing: 01.12.2015
(51) Int. Cl.: A23C 9/00, A23C 11/00, A23C 13/00, A23C 15/00, A23C 17/00, A23C 19/00, A23C 23/00, A23C 9/20, A61K 35/20

(54) **MILK OR DAIRY PRODUCT ON THE BASIS OF COW'S, GOAT'S, SHEEP'S, BUFFALO'S OR MARE'S MILK**

(30) Priority: 04.12.2014 SK 501472014 U
(71) Applicant: Aspin a.s., 85101 Bratislava (SK)
(72) Inventor: Spirko, Jozef, Bratislava (SK)
(74) Representative: Majlingova, Marta

(57) **Abstract**

The subject-matter is that milk and dairy products, such as treated milk, treated creams (such as treated cream, whipping cream, pressure packed cream, whipped cream), modified milks and modified dairy products, flavoured milk and flavoured liquid dairy products, fermented products - fermented milk products (such as yogurts, acidophilus milk, kefir, kefir milk, yogurt containing alternative culture, concentrated fermented milk, dairy products enriched with added dairy cultures, fermented products thermally treated after fermentation process), condensed dairy products, dried milk, milk proteins including caseinates, cheese (such as non-ripening cheese including fresh cheese, ripening cheese, blue cheese, steamed cheese, whey cheese, curdled cheese, barrelled cheese, bryndza (sheep's milk cheese), cheese products, processed cheese, processed cheese products, milk for making cheese), butter and other milk fats, buttermilk contain 0.01 to 45 vol% of colostrum referring to the whole mixture. Cow's, goat's, sheep's, buffalo's or mare's milk or mixture thereof can be used for production of the said products.

## Description

### Technical field of invention

Invention relates to milk and dairy products containing first milk (colostrum).

### State of the art

The body of mammals use various antibodies in order to protect themselves against pathogens. As the placenta of majority of mammals is impermeable for immunoglobulin, neonates are vulnerable to external factors. Substances obtained from colostrum provide passive immunity until the immune system is activated.

Colostrum is produced by mammals in first days after parturition and it contains several types of active substances, such as antibodies (IgA, IgG and IgM), lactoferrin, lysozyme, lactoperoxidaze, cytokines (interleukins, tumor necrosis factors, chemokines), growth factors (IGF, TGF, FGF, EGF, GM-CSF, PDGF, VEGF), vitamins (vitamin A and other fat-soluble vitamins), minerals. Its digestibility is easier due to the lower content of lactose.

Before antibiotics were developed colostrum used to be a main source in fight against illnesses. At the beginning of 50s of the 20th century Dr. Albert Sabin recommended administration of bovine colostrum to children suffering from polio. Later on, when producing his first oral vaccine against polio he used immunoglobulins originating from bovine colostrum.

The beneficial effects of colostrum were forgotten when antibiotics began to expand. Currently, however, irresponsible use of antibiotics has resulted in wide-spreading of microbial resistance and thus pointing to several unsolved problems. Many people support the idea that although antibiotics are the high-quality tools in the fight against diseases, they have not tackled the most fundamental problem of prevention. Different sources mention various positive effects of colostrum, the natural stimulant of the immune system, such as the increase of lean body mass, positive effects of maintaining oral hygiene, prevention of influenza, blood sugar balance, skin rejuvenation, joints care, provision of healthy intestinal flora, healing acceleration, trauma recovery time reduction, decrease of depression, reduction of expression of allergic reactions, increasing stamina, higher ability to tolerate stress, increasing protection against bacterial and fungal diseases. The beneficial effects of colostrum are expressed in its several nick-names, such as "high-octane milk" or "liquid gold".

There are several products made of colostrum on the market at present, they are primarily capsules and beverage concentrates. Colostrum has not been used as an ingredient in the dairy products known so far. Biological value of proteins is significantly higher in colostrum than in milk.

Extension of range of dairy products and introduction of a product line enabling colostrum to become part of our daily diet is our goal. The most effective prevention of diseases is established when the product fits into our daily biorhythm.

### Subject-matter of the invention

Shortcomings of the state of the art are significantly eliminated by cow's, goat's, sheep's, buffalo's or mare's milk-based milk or dairy product or mixtures thereof according to the present invention, which subject-matter is a product containing 0.01 to 45 vol% of colostrum referring to the whole mixture.

Dairy products in terms of the present invention are the following:
a) Treated milk
b) Treated creams, such as treated cream, whipping cream, pressure packed cream, whipped cream
c) Modified milk and modified dairy products, flavoured milk and flavoured liquid dairy products
d) Fermented dairy products - fermented products made of milk, such as yogurts, acidophilus milk, kefir, kefir milk, yogurt containing alternative culture, concentrated fermented milk, dairy products enriched with added dairy cultures, fermented products thermally treated after fermentation process
e) Condensed dairy products
f) Dry milk
g) Milk proteins including caseinates
h) Cheeses, such as non-ripening cheese including fresh cheese, ripening cheese, blue cheese, steamed cheese, whey cheese, curdled cheese, barrelled cheese, bryndza (sheep's milk cheese), cheese products, processed cheese, processed cheese products, milk for making cheese
i) Butter and other milk fats
j) Buttermilk

Cow's, goat's, sheep's, buffalo's and mare's milk or mixture thereof may be used for production of milk and dairy products according to the present invention.

Pasteurised as well as unpasteurised colostrum may be used for production of milk and dairy products according to the present invention.

Bovine colostrum is used primarily for production of goods according to the present invention, lamb, goat, buffalo or equine colostrum or mixtures thereof may be used, as well.

The most important advantage of the products according to the present invention consists in the fact it is not necessary to administer various food supplements, however important proteins are consumed directly in the diet and are engaged in the daily routine. Widening the range of beneficial dairy products is another advantage.

### Examles

### Example 1

### Yogurts

Milk is pasteurised at the temperature of 85 °C for 15 s in the production of yogurt. In order to preserve the active substances the best way, colostrum is pasteurised at the temperature of 72 °C for 15 s, the two components are then cooled to the temperature of 35 °C. Yogurt culture is added at the temperature of 35 °C. Stirred milk containing 10 vol% of colostrum and containing a respective amount of culture is poured into glass vessels and placed into an incubator at the temperature of 45 °C for 8 hours. The identical method is applied to flavoured yogurts. Various flavours (fruit, chocolate, vanilla, etc.) are used for flavouring.

| | |
|---|---|
| • Colostrum containing yogurt | |
| Final yogurt contents: 200 ml | |
| Amounts used: | |
| Pasteurised milk | 180.0 ml |
| Pasteurised colostrum | 20.0 ml |
| Yogurt culture YF-L811® | 17.6 mg (aliq.) |
| | |
| **•** Raspberry flavoured colostrum containing yogurt | |
| Final yogurt contents: 200 ml | |
| Amounts used: | |
| Pasteurised milk | 160.0 ml |
| Pasteurised colostrum | 20.0 ml |
| Yogurt culture | 17.6 mg (aliq.) |
| Raspberry fruit flavour | 20.0 ml |

As far taste is concerned yogurts are similar to conventional milk yogurts. Colostrum causes a yellowish colouration of surface.

### Example 2

### Cheese

### • Fresh cheese

A method begins with stirring of cow milk (85 vol%) and colostrum (15 vol%). Pasteurised as well as unpasteurised mixture of cow"s milk and bovine colostrum containing milk may be used as basic ingredient in the production of cheese. For pasteurization the temperature between 72 °C to 75 °C for 15 seconds and cooling the milk to the temperature of 38 to 40 °C is recommended. The temperature depends on the rennet used. Milk heated that way is sulfurized. After sulfuring it is thoroughly stirred for at least 5 minutes in order to reach homogenous mixing with the rennet and allowed to rest for 30 to 45 minutes. The curd mass is cut into cubes of the size of 4 to 6 cm. The whey is removed from the mass. In 7 to 10 minutes the mass is compact and sinks to the bottom of the vessel. Subsequently, the mass is heated to the temperature of 40 to 42 °C while being constantly stirred in order to prevent clustering and is left to rest for approximately 40 minutes. After this step spices and various flavours may be added to cheese. The mass is poured into a vessel lined with cheesecloth or into stainless steel moulds, where the excess whey is released and a required shape is formed. A cow's cheese curd - fresh cheese is obtained by means of the process.

The cheese curd made of sheep's, goat's, buffalo's and mare's milk or mixtures thereof together with use of lamb, goat, buffalo or equine colostrum may be obtained by the identical method.

| | |
|---|---|
| Final cheese mass 1 kg | |
| Amounts used: | |
| Unpasteurised milk | 8.5 l |
| Unpasteurised colostrum | 1.5 l |
| Rennet | 10.0 ml |

Addition of colostrum has a favourable effect regarding a soft light texture and a neutral flavour that is characterised for the subject fresh hard cheese.

### • Ripening cheese

In the production of ripening cheese the cow's fresh cheese is made by the method described above, only from a mixture of 70 vol% of fresh cow's milk and 30 vol% of colostrum, it is crumbled into a sieve containing vessel in order to prevent drainage of excess whey. At the first pressing the curd is weighted with a weight of 3 - 4 kg. After 30 - 45 minutes cheese is turned and weighted down again. After another 30 - 45 minutes the weight is increased to 5 - 6 kg. Cheese is turned twice every half an hour and then after 2 hours. Hard white cheese is obtained after the pressing process. The cheese is brined in a solution of salt and is left in the brine for 48 hours. Everyday turning of cheese is necessary during ripening in order to secure even maturation. Cheese is rubbed with a salt solution as needed.

| | |
|---|---|
| Final cheese mass 1 kg | |
| Amounts used: | |
| Fresh hard cheese | 1.2 kg |
| Water | 1.0 l |
| Salt | 0.2 kg |

Colostrum causes a beautiful golden yellow colour of the ripening cheese having a light soft texture at a section.

### • Smoked cheese

Twenty-four hour old colostrum containing fresh cheese moulded in a stainless steel mould is the basic ingredient. Before smoking the cheese is cut into a desired shape and salted in brine (1 kg of salt for 5 l of water) for six hours. The cold smoking curing takes 10 hours at the temperature of 40 °C.

| | |
|---|---|
| Final cheese mass 1 kg | |
| Amounts used: | |
| Fresh hard cheese | 1.2 kg |
| Beech wood and various fruit-tree woods for smoking | |

### Example 3

### Cheese spreads

Two basic colostrum containing products are used at the production of cheese spreads, namely plain yogurt having contents of colostrum 1 to 10 % by volume and fresh or smoked cheese having contents of colostrum 0 to 30 % by volume. The production method begins with mixing cheese and colostrum containing yogurt. The mass is crushed until homogenous texture is obtained. Spices, such as pepper, cardamom, paprika, garlic and the like are added into the mass thus obtained.

| | |
|---|---|
| Final spread mass 1 kg | |
| Amounts used: | |
| Colostrum containing plain yogurt 10 % | 0.30 kg |
| Fresh or smoked cheese containing colostrum 15 % | 0.70 kg |
| Spices | 0.02 kg |

The product is primarily characterised by a light texture and pleasant sour taste.

### Example 4

### Yogurt drink

Colostrum containing plain yogurt diluted by a mixture of pasteurised milk and pasteurised colostrum in ratio 2:1 is used for the production of yogurt drinks. The temperature of 71.7 °C for 15 seconds and cooling of milk to the temperature of 30 °C is recommended for pasteurisation. In the production of yogurt drink containing fruit flavouring fruit syrup and stewed fruit are mixed into the diluted yogurt and stirred thoroughly in order to obtain homogenous texture.

| | |
|---|---|
| Final volume of yogurt drink 1 l | |
| Amounts used: | |
| Colostrum containing plain yogurt | 300 ml |
| Mixture of pasteurised milk and colostrum 2:1 | 300 ml |
| Crushed stewed fruit | 300 ml |
| Fruit syrup | 100 ml |

As far as taste is concerned yogurt drink is a balanced product, in which the taste of colostrum does not preponderate. Consumption is recommended for those, who wish to exploit a rich variability of the active ingredients in a conventional yogurt drink.

### Example 5

### Acidophilus milk

Milk is pasteurised at the temperature of 90°C for 15 s in the production of acidophilus milk. Afterwards the milk is cooled. In order to start a fermentation cycle *Lactobacillus acidophilus* culture starting at the temperature of 55 °C shall be added. During the cooling it is necessary to comply with maintaining the optimal temperatures for the bacteria culture. Cooling below 35 °C causes cessation of bacteria growth, while maintaining the temperature above 55 °C causes killing of bacteria strains. In both cases, a failure to maintain the optimal temperature results in stopping of the fermentation process. After the cooling milk is mixed with the culture and poured into a fermentation bottle. In order to increase effectiveness of mixing the culture is at first stirred in a small amount of milk, which is subsequently mixed into the total amount. Incubation is taking place at the inoculation temperature of approximately 55 °C for 24 hours. Acidophilus milk is obtained after incubation. Colostrum is pasteurised at the temperature of 71.7 °C for 15 s, and is mixed with acidophilus milk in the required ratio. Unflavoured acidophilus milk may contain 0.1 to 25 vol% of colostrum.

The identical preparation method is used for flavoured acidophilus milk, only chosen flavour or syrup is poured into the vessels at the end of the process. Flavoured acidophilus milk may contain 0.1 to 15 vol% of colostrum.

| | |
|---|---|
| Final volume of acidophilus milk 0.33 l | |
| Amounts used: | |
| Pasteurised milk | 280 ml |
| Pasteurised colostrum | 17 ml (5.15 vol%) |
| Fruit syrup | 33 ml |

The product combines beneficial effects of conventional acidophilus milk and colostrum. The highest synergy consists in the effective support of the digestive system, since both acidophilus milk as well as colostrum contribute to the maintenance of healthy intestinal flora and support development of antibodies against many diseases. Colostrum is digestible more easily due to decreased concentration of lactose. Milk sugar is broken down to lactic acid in acidophilus milk.

### Example 6

### Colostrum containing fresh milk

The product must be prepared from freshly milked milk and colostrum, i.e. without pasteurisation.

| | |
|---|---|
| Final volume of drink 1 l | |
| Amounts used: | |
| Unpasteurised milk | 600 ml |
| Unpasteurised colostrum | 400 ml |

The mixture in the cited ratio guarantees mitigation of a laxative effect of colostrum at the greatest benefit from active ingredients.

Variability of colostrum containing product line offers sufficiently wide choice in order to include the present products into the daily diet.

## Claims

1. Milk or dairy product based on cow's, goat's, sheep's, buffalo's or mare's milk or mixtures thereof **characterized in that** it contains 0.01 to 45 % by volume of colostrum.

2. Milk or dairy product according to Claim 1 **characterized in that** colostrum used is pasteurised.

3. Milk or dairy product according to Claim 1 **characterized in that** colostrum used is unpasteurised.

4. Milk or dairy product according to one of Claims 1, 2 or 3 **characterized in that** t bovine colostrum is used as colostrum.

5. Milk or dairy product according to one of Claims 1, 2 or 3 **characterized in that** t lamb colostrum is used as colostrum.

6. Milk or dairy product according to one of Claims 1, 2 or 3 **characterized in that** t goat colostrum is used as colostrum.

7. Milk or dairy product according to one of Claims 1, 2 or 3 **characterized in that** t buffalo colostrum is used as colostrum.

8. Milk or dairy product according to one of Claims 1, 2 or 3 **characterized in that** t equine colostrum is used as colostrum.

9. Milk or dairy product according to one of Claims 1, 2 or 3 **characterized in that** a mixture of at minimum two types of colostrum chosen from the group of bovine colostrum, lamb colostrum, goat colostrum, buffalo colostrum, equine colostrum is used as colostrum.

10. Milk or dairy product according to Claim 1 **characterized in that** the following are the dairy products:
a) Treated milk
b) Treated cream, such as treated cream, whipping cream, pressure packed cream, whipped cream
c) Modified milk and modified dairy products, flavoured milk and flavoured liquid dairy products
d) Fermented dairy products - fermented products made of milk, such as yogurts, acidophilus milk, kefir, kefir milk, yogurt containing alternative culture, concentrated fermented milk, dairy products enriched with added dairy cultures, fermented products thermally treated after fermentation process
e) Condensed dairy products
f) Dried milk
g) Milk proteins including caseinates
h) Cheese, such as non-ripening cheese including fresh cheese, ripening cheese, blue cheese, steamed cheese, whey cheese, curdled cheese, barrelled cheese, bryndza, cheese products, processed cheese, processed cheese products, milk for making cheese
i) Butter and other milk fats
j) Buttermilk
